# EUROPÄISCHE PATENTSCHRIFT

(11) **EP 0 714 499 B1**
(45) Veröffentlichungstag und Bekanntmachung des Hinweises auf die Patenterteilung: **14.01.1998**
(21) Anmeldenummer: 95924831.1
(22) Anmeldetag: 27.06.1995
(51) Int. Cl.: F28C 1/00

(54) **VERFAHREN ZUR VERBESSERUNG DER AUSBREITUNG DER IN DER ANFAHRPHASE EINES KRAFTWERKES ANFALLENDEN UND ÜBER DEN KÜHLTURM IN DIE ATMOSPHÄRE ABZULEITENDEN RAUCHGASE**
PROCESS FOR IMPROVING THE EXPANSION OF THE FLUE GASES PRODUCED DURING THE STARTING PHASE OF A POWER STATION AND GIVEN OFF INTO THE ATMOSPHERE VIA THE COOLING TOWER
PROCEDE D'AMELIORATION DE LA DISSEMINATION DES GAZ BRULES DEGAGES PENDANT LA PHASE DE DEMARRAGE D'UNE CENTRALE ELECTRIQUE ET EVACUES DANS L'ATMOSPHERE PAR LA TOUR DE REFROIDISSEMENT

(30) Priorität: 28.06.1994 DE 4422595
(43) Veröffentlichungstag der Anmeldung: 05.06.1996
(73) Patentinhaber: SAARBERGWERKE AKTIENGESELLSCHAFT, 66111 Saarbrücken (DE)
(72) Erfinder: JOHÄNNTGEN, Uwe, D-66797 Wadgassen (DE)
(86) Internationale Anmeldenummer: DE9500815
(87) Internationale Veröffentlichungsnummer: WO9600878

(56) Entgegenhaltungen:
- GB-A- 525 702
- US-A- 3 488 960

## Beschreibung

Die Erfindung betrifft ein Verfahren zum Betrieb eines fossil befeuerten Kraftwerkes mit einem über einen Kühlturm abgeleiteten Wärmestrom, bei welchem das in den Kühlturm eingeleitete Rauchgas gemeinsam mit den Kühlturmschwaden in die Atmosphäre strömt.

Fossil befeuerte Kraftwerke werden in immer stärkerem Maße mit Rauchgasableitung über den Kühlturm geplant und ausgeführt. Ein Grund hierfür sind die günstigen Ausbreitungsverhältnisse, verursacht durch den über den Kühlturm abgeleiteten Wärmestrom. Darüber hinaus kann bei derartigen Kraftwerken auf den Bau eines zusätzlichen Kamines zur Rauchgasableitung verzichtet werden.

Beim Anfahren derartiger Kraftwerksanlagen, z. B. nach Nacht- und Wochenendstillständen, werden die Ausbreitungsverhältnisse jedoch ungünstiger als dies im Vergleich zu einer Rauchgasableitung über einen Schornstein während des Anfahrens der Fall wäre, da der für günstige Ausbreitungsverhältnisse erforderliche Wärmestrom über den Kühlturm nicht ansteht. Der Grund hierfür liegt im Zeitverzug zwischen Beaufschlagung des Kühlturmes mit Rauchgas und der Abführung nennenswerter Wärmeströme aus dem Kondensator des Wasser-Dampf-Kreislaufes.

Vereinzelt wurden deshalb bei Kraftwerken mit Rauchgasableitung über den Kühlturm kostenintensive Anfahrkamine gebaut, um der Problematik der ungünstigeren Immissionsverhältnisse in der Anfahrphase zu begegnen.

Der Erfindung liegt die Aufgabe zugrunde, bei einem Verfahren der eingangs genannten Art während der Anfahrphase für die Ableitung der Rauchgase in die Atmosphäre Voraussetzungen zu schaffen, die denen des stationären Betriebes einer Rauchgasableitung über den Kühlturm entsprechen und damit eine Verbesserung der Ausbreitung der Rauchgase während der Anfahrphase bewirken.

Die Aufgabe wird erfindungsgemäß dadurch gelöst, daß in der Anfahrphase der im Kühlturm befindlichen Kühlluft Wärme zugeführt wird.
Entsprechend dem Ausmaß des zugeführten Wärmestromes führt dies zu Auftriebsverhältnissen im Kühlturm, die denen des stationären Betriebes vergleichbar sind.

Die Wärmezufuhr an die Kühlluft erfolgt dabei erfindungsgemäß besonders zweckmäßig durch Wärmeübertragung vom warmen Kühlwasser auf die Kühlluft, da beim Naßkühlturm auch im stationären Betrieb das warme Kühlwasser zur Wärmeübertragung auf die Kühlluft über ein sogenanntes Rieselwerk in Gegenstrom zur auftreibenden Kühlluft in Umlauf gebracht wird.

Ein ähnliches Verfahren ist aus der US-A-3488 960 bekannt, wobei das Rauchgas über ein Rohr im Kühlturm in die Atmosphäre strömt. Beim Betrieb des bekannten Kraftwerkes wird Kühlwasser über eine Leitung einem Kondensator zugeführt. Auch wird der Kühlwasserstrom durch den Abdampf einer Turbine erwärmt und einem Rieselwerk zugeführt.

Bei der Erfindung dagegen wird das erwärmte Kühlwasser durch einen Bypass 9 entweder dem genannten Rieselwerk und dann dem Wasserreservoir zugeführt oder beim Anfahren direkt und ohne Kühlung in das Wasserreservoir geleitet, so daß eine Abgabe eines Wärmestromes während der Anfahrphase möglich ist. Das erfindungsgemäße Verfahren erweist sich dabei als besonders wirtschaftlich, wenn das während des Betriebes anfallende warme Kühlwasser noch vor dem Abschalten des Kraftwerkes gespeichert und dann nach Nacht- oder Wochenendstillständen in der Anfahrphase zur Wärmezufuhr an die Kühlluft verwendet wird.

Eine Speicherung des warmen Kühlwassers in der Kühlturmtasse erspart Baumaßnahmen für separate Kühlwasserspeicher und nutzt den eigentlichen Kühlkreislauf des Kraftwerkes.

Die Wirksamkeit des erfindungsgemäßen Verfahrens wird gesteigert, wenn durch zusätzliche Wärmeabgabe in den Kühlwasserkreislauf, noch vor dem Abschalten des Kraftwerkes, die Temperatur des zu speichernden warmen Kühlwassers angehoben wird.

Die mit dem Kühlwasser in deren Speicher gelangende Wärmemenge ist umso höher, je weniger Wärme das Kühlwasser während der Wärmeübertragung auf die Kühlluft im Kühlturm abgibt. Erfindungsgemäß kann dazu vor dem Abschalten des Kraftwerkes zumindest ein Teil des Kühlwassers über einen Bypass unmittelbar ohne vorherige Wärmeabgabe im Khlturm dem Kühlwasserspiecher, z. B. der Kühlturmtasse, zugeführt werden. Eine vergleichbare Wirkung erreicht man erfindungsgemäß, wenn man die dem Kühlturm zuströmende Kühlluft verringert, was z. B. durch Verbauen des Strömungsquerschnittes erreicht wird.

Nach längeren Stillstandszeiten als nach den Wochennendstillständen üblich besteht die Gefahr, daß durch Wärmeverluste im Speichersystem wirksame Auftriebsverhältnisse über die Dauer der Anfahrphase nicht ohne Wärmenachfuhr aufrecht erhalten werden können. Es besteht dann die Möglichkeit schon während der Anfahrphase durch Auskopplung von Prozeßwärme oder besonders wirtschaftlich durch Übertragung von Anfahrrestwärme über den Wasser-Dampfkreislauf des Kraftwerkes auf das Kühlwasser, dieses entsprechend zu erwärmen.

Ein Ausführungsbeispiel, in dem die erfindungsgemäße Nutzung eines zum Anfahren initiierten Wärmestromes über den Kühlturm dadurch erreicht wird, daß rechtzeitig vor dem Abfahren der Anlage eine ausreichende Wärmemenge im Kühlwasser der Kühlturmtasse gespeichert wird, um dann in der anfahrphase im Wärmetausch auf die Kühlluft übertragen zu werden, ist der schematischen Zeichnung zu entnehmen.

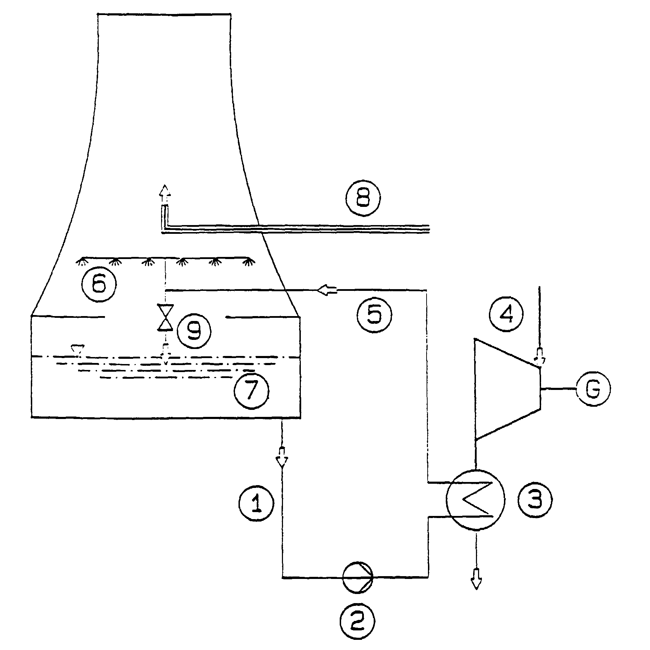

Die Figur zeigt, reduziert auf die erfindungsrelevanten Anlagenteile, die Struktur des Hauptkühlwasserkreislaufes sowie die Rauchgasableitung über den Kühlturm.

Entsprechend der schematischen Darstellung wird das Kühlwasser 1 über Pumpen 2 dem Kondensator 3 zugeführt, in dem der Abdampf der Turbine 4 kondensiert. Der erwärmte Kühlwasserstrom 5 wird zum Kühlturm geleitet, über das Rieselwerk 6 geführt, durch Kontakt mit der Luft und durch Verdunstung des Wassers abgekühlt und anschließend in der Kühlturmtasse 7 gesammelt. Das in den Kühlturm eingeleitete Rauchgas 8 strömt nun gemeinsam mit den zugerzeugenden Kühlturmschwaden in die Atmosphäre.

Im Wassersteigeschacht des Kühlturmes ist über die Bypassleitung 9 erfindungsgemäß die Möglichkeit geschaffen, den Kühlwasserstrom direkt, d. h. ohne Kühlung, in die Kühlturmtase einzuleiten und dadurch vermehrt Wärme in dieser anzusammeln. Steht das Abfahren des Blockes bevor, muß rechtzeitig durch Umfahrung der Kühleinrichtungen über den Bypass 9 das aufgeheizte Kühlwasser ohne Abkühlung in die Kühlturmtasse gefördert werden, um erfindungsgemäß eine genügende Wärmemenge in der Kühlturmtasse zu speichern, die Abgabe eines auftriebswirksamen Wärmestromes über den Kühlturm während der Anfahrphase erlaubt.

## Patentansprüche

1. Verfahren zum Betrieb eines fossil befeuerten Kraftwerkes mit einem über einen Kühlturm abgeleiteten Wärmestrom, bei welchem das in den Kühlturm eingeleitete Rauchgas gemeinsam mit den Kühlturmschwaden in die Atmosphäre strömt,
**dadurch gekennzeichnet, daß**
in der Anfahrphase der im Kühlturm befindlichen Kühlluft Wärme zugeführt wird.

2. Verfahren nach Anspruch 2,
**dadurch gekennzeichnet, daß**
die Wärmezufuhr an die Kühlluft durch eine Wärmeübertragung vom warmen Kühlwasser auf die Kühlluft erfolgt.

3. Verfahren nach einem der Ansprüche 1 bis 2,
**dadurch gekennzeichnet, daß**
warmes Kühlwasser aus dem Betrieb vor dem Abschalten des Kraftwerkes gespeichert und in der Anfahrphase zur Wärmezufuhr an die Kühlluft verwendet wird.

4. Verfahren nach einem der Ansprüche 1 bis 3,
**dadurch gekennzeichnet, daß**
die Speicherung des warmen Kühlwassers in der Kühlturmtasse erfolgt.

5. Verfahren nach einem der Ansprüche 1 bis 4,
**dadurch gekennzeichnet, daß**
dem zu speichernden warmen Kühlwasser vor dem Abschalten des Kraftwerkes zusätzlich Wärme zugeführt wird.

6. Verfahren nach einem der Ansprüche 1 bis 5,
**dadurch gekennzeichnet, daß**
vor dem Abschalten des Kraftwerkes zumindest ein Teil des warmen Kühlwassers ohne vorherige Wärmeabgabe im Kühlturm unmittelbar dem Kühlwasserspeicher zugeführt wird.

7. Verfahren nach den Ansprüchen 5 und 6,
**dadurch gekennzeichnet, daß**
vor dem Abschalten des Kraftwerkes der im Kühlturm strömende Kühlluftstrom verringert wird.

## Claims

1. Method for operation of a fossil fuel-fired power station with a stream of heat discharged through a cooling tower, whereby the flue gas introduced into the cooling tower flows into the atmosphere with the vapour from the cooling tower, characterised in that heat is introduced into the cooling air in the cooling tower in the starting phase.

2. Method according to claim 2, characterised in that the heat is introduced into the cooling air by transfer of heat from the warm cooling water to the cooling air.

3. Method according to one of claims 1 to 2,
characterised in that warm cooling water from the operation prior to shut-down of the power station is stored and used in the starting phase to introduce heat into the cooling air.

4. Method according to one of claims 1 to 3,
characterised in that the warm cooling water is stored in the cooling tower cup.

5. Method according to one of claims 1 to 4,
characterised in that heat is additionally introduced into the warm cooling water to be stored before the power station is shut down.

6. Method according to one of claims 1 to 5,
characterised in that prior to shut-down of the power station at least one part of the warm cooling water is introduced directly into the cooling water accumulator without prior discharge of heat in the cooling tower.

7. Method according to claims 5 and 6, characterised in that prior to shut-down of the power station the stream of cooling air flowing in the cooling tower is reduced.

## Revendications

1. Procédé de fonctionnement d'une centrale d'énergie chauffée par un combustible fossile, comportant un flux calorifique évacué par une tour de refroidissement, et selon lequel les fumées introduites dans la tour de refroidissement s'échappent dans l'atmosphère avec les nappes venant de la tour de refroidissement,
caractérisé en ce qu'
on apporte de la chaleur à l'air de refroidissement de la tour de refroidissement.

2. Procédé selon la revendication 1,
caractérisé en ce qu'
on réalise l'apport calorifique à l'air de refroidissement par un échange de chaleur entre l'eau de refroidissement, chaude et l'air de refroidissement, froid.

3. Procédé selon l'une des revendications 1 et 2,
caractérisé en ce qu'
on stocke de l'eau de refroidissement chaude provenant du fonctionnement de la centrale avant son arrêt et l'on utilise dans la phase de démarrage pour assurer l'apport calorifique à l'air de refroidissement.

4. Procédé selon l'une des revendications 1 et 3,
caractérisé en ce qu'
on stocke de l'eau de refroidissement chaude dans le bassin de la tour de refroidissement.

5. Procédé selon l'une des revendications 1 et 4,
caractérisé en ce que
par l'air, on fournit de la chaleur supplémentaire à l'eau de refroidissement chaude à stocker avant d'arrêter la centrale.

6. Procédé selon l'une des revendications 1 et 5,
caractérisé en ce qu'
avant d'arrêter la centrale, on fournit au moins une partie de l'eau de refroidissement chaude sans échange de chaleur préalable à la tour de refroidissement, directement à l'accumulateur d'eau de refroidissement.

7. Procédé selon les revendications 5 et 6,
caractérisé en ce qu'
on diminue le courant d'air de refroidissement alimentant la tour de refroidissement avant d'arrêter la centrale.
